# EUROPEAN PATENT APPLICATION

(11) **EP 4 746 523 A1**
(43) Date of publication of application: **20.05.2026**
(21) Application number: 23944683.4
(22) Date of filing: 12.07.2023
(51) Int. Cl.: H04W 48/08

(54) **COMMUNICATION METHOD, ACCESS POINT DEVICE, STATION DEVICE AND COMMUNICATION SYSTEM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/107043
(87) International publication number: WO 2025/010663

(57) **Abstract**

The embodiments of the present disclosure relate to a communication method, an access point (AP) device, a station device and a communication system. The communication method comprises: an AP device determining a first initial connection establishment frame, wherein the first initial connection establishment frame comprises first identification information, which identifies that the AP device supports a UHR function, the AP device subsequently sends a first extended frame of the first initial connection establishment frame, and ultra high reliability (UHR) related information is carried in the first extended frame; and sending the first initial connection establishment frame. In the embodiments of the present disclosure, UHR related information is carried in an extended frame, such that the backward compatibility of an AP device is achieved; moreover, a device obtains UHR related information when parsing the extended frame, allowing a station device to quickly join a BSS of the AP device and perform UHR communication with the AP device.

## Description

### FIELD

The present invention relates to the field of communication technology, and in particular to a communication method, an access point device, a station device, and a communication system.

### BACKGROUND

Currently, Wi-Fi technology is being researched in areas such as Ultra High Reliability (UHR), with the goal of improving connection reliability, reducing latency, improving manageability, increasing throughput at different signal-to-noise ratio (SNR) levels, and reducing device-level power consumption for Wireless Local Area Networks (WLAN).

In UHR, a format of an initial access frame needs to be further improved to make the initial access frame applicable to UHR requirements.

### SUMMARY

Embodiments of the present invention provide a communication method, an access point device, a station device and a communication system to further improve the format of the initial access frame.

In an aspect, embodiments of the present invention provide a communication method, which includes: determining, by an access point device (AP), a first initial connection establishment frame; where the first initial connection establishment frame includes first identification information, and the first identification information indicates that: the AP supports an ultra high reliability (UHR) function, and the AP subsequently sends a first extended frame of the first initial connection establishment frame, and the first extended frame includes ultra high reliability (UHR) related information; and sending the first initial connection establishment frame.

In another aspect, embodiments of the present invention further provide a communication method, which includes: receiving, by a station device (STA), a first initial connection establishment frame; where the first initial connection establishment frame includes first identification information, and the first identification information indicates: an access point device (AP) supports an ultra high reliability (UHR) function, and the AP subsequently sends a first extended frame of the first initial connection establishment frame, and the first extended frame includes ultra high reliability (UHR) related information.

In another aspect, embodiments of the present invention further provide an access point device (AP), which includes: a determining module, configured to determine a first initial connection establishment frame; where the first initial connection establishment frame includes first identification information, and the first identification information indicates that: the AP supports an ultra high reliability (UHR) function, and the AP subsequently sends a first extended frame of the first initial connection establishment frame, and the first extended frame includes ultra high reliability (UHR) related information; and a sending module, configured to send the first initial connection establishment frame.

In another aspect, embodiments of the present invention further provide a station device (STA), which includes: a receiving module, configured to receive a first initial connection establishment frame; where the first initial connection establishment frame includes first identification information, and the first identification information indicates that: an access point device (AP) supports an ultra high reliability (UHR) function, and the AP subsequently sends a first extended frame of the first initial connection establishment frame, and the first extended frame includes ultra high reliability (UHR) related information.

In another aspect, embodiments of the present invention further provide a station device, which includes: one or more processors, and the station device (STA) is configured to perform the communication method according to embodiments of the present invention.

In another aspect, embodiments of the present invention further provide a station device, which includes: one or more processors, and the station device (STA) is configured to perform the communication method according to embodiments of the present invention.

Embodiments of the present invention further provide a communication system, which includes an access point device (AP) and a station device (STA); the access point device (AP) is configured to implement the communication method according to embodiments of the present invention, and the station device (STA) is configured to implement the communication method according to embodiments of the present invention.

Embodiments of the present invention provide a storage medium, having stored therein instructions that when run on a communication device, cause the communication device to perform the communication method according to embodiments of the present invention, or the communication method according to embodiments of the present invention.

In embodiments of the present invention, by including the UHR related information in the extended frame, backward compatibility of the access point device is achieved; and the device obtains the UHR related information through parsing the extended frame, so that the station device may quickly join a BSS of the access point device and perform UHR communication with the access point device. Embodiments of the present invention improve the format of the initial access frame to make it applicable to UHR requirements.

Additional aspects and advantages of embodiments of the present invention will be partially given in the description below, and will become apparent therefrom, or will be learned through practice of the present invention.

### BRIEF DESCRIPTION OF THE DRAWINGS

In order to more clearly illustrate the technical solutions in embodiments of the present invention, drawings to be used for the description of embodiments of the present invention are described below, and the following drawings are only some embodiments of the present invention and do not constitute specific limitations on the protection scope of the present invention.
FIG. 1 is a schematic diagram of an architecture of a communication system according to embodiments of the present invention;
FIG. 2 is a schematic interactive diagram of a method according to embodiments of the present invention;
FIG. 3 is a schematic flowchart of a communication method according to embodiments of the present invention;
FIG. 4 is another schematic flowchart of a communication method according to embodiments of the present invention;
FIG. 5 is a schematic block diagram of an access point device according to embodiments of the present invention;
FIG. 6 is a schematic block diagram of a station device according to embodiments of the present invention;
FIG. 7 is a schematic block diagram of a terminal according to embodiments of the present invention; and
FIG. 8 is a schematic block diagram of a chip according to embodiments of the present invention.

### DETAILED DESCRIPTION

Embodiments of the present invention provide a communication method, an access point device, a station device, and a communication system.

In a first aspect, embodiments of the present invention provide a communication method, which includes: determining, by an access point device (AP), a first initial connection establishment frame; where the first initial connection establishment frame includes first identification information, and the first identification information indicates that: the AP supports an ultra high reliability (UHR) function, and the AP subsequently sends a first extended frame of the first initial connection establishment frame, and the first extended frame includes UHR related information; and sending the first initial connection establishment frame.

In the above embodiments, backward compatibility of the access point device is achieved by including the UHR related information in the first extended frame; and a station device obtains the UHR related information through parsing the first extended frame, so that the station device may quickly join a BSS of the access point device and perform UHR communication with the access point device.

In combination with some embodiments of the first aspect, in some embodiments, the first initial connection establishment frame includes a beacon frame, and the ultra high reliability (UHR) related information includes at least one of: a UHR capabilities information element, a UHR operation information element, broadcast period information of the first extended frame, service set identifier (SSID) information, timestamp information or basic service set (BSS) change sequence information.

In the above embodiments, the access point device periodically sends a beacon frame at a certain time interval, and the beacon frame includes the UHR related information, thereby realizing synchronous operation and sleep of devices in the network.

In combination with some embodiments of the first aspect, in some embodiments, the first initial connection establishment frame includes a probe response frame, an association response frame, or a re-association response frame; and the UHR related information includes at least one of: a UHR capabilities information element, or a UHR operation information element.

In the above embodiments, the access point device introduces the UHR capabilities information element and/or the UHR operation information element in the probe response frame, the association response frame, and/or the re-association response frame, to indicate the UHR capability information supported by the access point device.

In combination with some embodiments of the first aspect, in some embodiments, the first identification information is included in a supported rates and BSS membership selectors information element of the first initial connection establishment frame.

In the above embodiments, the supported rates and BSS membership selectors information element is used to indicate that the access point device 102 supports the UHR function and the UHR related information is included in the subsequent first extended frame.

In combination with some embodiments of the first aspect, in some embodiments, the first identification information includes: a BSS membership selectors indication bit in the supported rates and BSS membership selectors information element; or an indication bit newly added in the supported rates and BSS membership selectors information element.

In the above embodiments, the BSS membership selectors indication bit may be used by the first identification information, for example, the BSS membership selectors indication bit may be assigned with a value, to indicate that the access point device 102 supports the UHR function and the UHR related information is included in the subsequent first extended frame; or a new indication bit is added in the supported rates and BSS membership selectors information element to indicate that the access point device supports the UHR function and the UHR related information is included in the subsequent first extended frame.

In combination with some embodiments of the first aspect, in some embodiments, a value of the BSS membership selectors indication bit is set to be different from a value corresponding to high throughput (HT) related information, very high throughput (VHT) related information, high efficiency (HE) related information, or extremely high throughput (EHT) related information.

In the above embodiments, for the case where the BSS membership selectors indication bit is used to indicate that the access point device supports the UHR function and the UHR related information is included in the subsequent first extended frame, the value of the BSS membership selectors indication bit is set to be different from the value corresponding to the HT related information, the VHT related information, the HE related information or the EHT related information to distinguish the UHR related information from the HT related information, the VHT related information, the HE related information or the EHT related information.

In combination with some embodiments of the first aspect, in some embodiments, the method further includes: receiving a second initial connection establishment frame; the second initial connection establishment frame includes second identification information, and the second identification information indicates that: a station device (STA) supports a UHR function, and the STA subsequently sends a second extended frame of the second initial connection establishment frame, and the second extended frame includes UHR related information.

In the above embodiments, the station device indicates in the second identification information that the station device supports the UHR function, and subsequently sends the second extended frame; the second extended frame includes the UHR related information, such as a UHR capabilities information element or a UHR operation information element. By including the UHR related information in the second extended frame to indicate related information of the UHR function supported by the station device, the access point device may obtain the UHR related information of the station device through parsing the second extended frame. If the UHR related information of the station device is consistent with the UHR related information of the access point device, the station device may join the BSS of the access point device and perform UHR communication with the access point device.

In combination with some embodiments of the first aspect, in some embodiments, the second initial connection establishment frame includes a probe request frame, and the UHR related information includes at least one of: a UHR capabilities information element, or a UHR operation information element.

In the above embodiments, when the station device scans for 802.11 networks currently available in an area where it is located, it sends a probe response frame including the UHR capabilities information element and/or the UHR operation information element to the access point device to indicate UHR capability information supported by the station device 101.

In combination with some embodiments of the first aspect, in some embodiments, the second initial connection establishment frame includes an association request frame or a re-association request frame; and the UHR related information includes at least one of: a UHR capabilities information element or a UHR operation information element determined according to a beacon frame.

In the above embodiments, when the station device is authenticated and attempts to join the network, it sends an association request frame (or a re-association request frame) to the access point device, and the association response frame and/or the re-association response frame include a UHR capabilities information element and/or a UHR operation information element to indicate the UHR capability information supported by the access point device 102.

In combination with some embodiments of the first aspect, in some embodiments, the second identification information is included in a supported rates and BSS membership selectors information element of the second initial connection establishment frame.

In the above embodiments, the supported rates and BSS membership selectors information element is used to indicate that the station device 101 supports the UHR function and the UHR related information is included in the subsequent second extended frame.

In combination with some embodiments of the first aspect, in some embodiments, the second identification information includes: a BSS membership selectors indication bit in the supported rates and BSS membership selectors information element; or an indication bit newly added in the supported rates and BSS membership selectors information element.

In the above embodiments, the BSS membership selectors indication bit may be used by the second identification information, for example, the BSS membership selectors indication bit may be assigned with a value, to indicate that the station device supports the UHR function and the UHR related information is included in the subsequent second extended frame; or a new indication bit is added in the supported rates and BSS membership selectors information element to indicate that the station device supports the UHR function and the UHR related information is included in the subsequent second extended frame.

In combination with some embodiments of the first aspect, in some embodiments, a value of the BSS membership selectors indication bit is set to be different from a value corresponding to high throughput (HT) related information, very high throughput (VHT) related information, high efficiency (HE) related information, or extremely high throughput (EHT) related information.

In the above embodiments, for the case where the BSS membership selectors indication bit is used to indicate that the station device supports the UHR function and the UHR related information is included in the subsequent first extended frame, the value of the BSS membership selectors indication bit is set to be different from the value corresponding to the HT related information, the VHT related information, the HE related information or the EHT related information to distinguish the UHR related information from the HT related information, the VHT related information, the HE related information or the EHT related information.

In a second aspect, embodiments of the present invention provide a communication method, which includes: receiving, by a station device (STA), a first initial connection establishment frame; where the first initial connection establishment frame includes first identification information, and the first identification information indicates: an access point device (AP) supports an ultra high reliability (UHR) function, and the AP subsequently sends a first extended frame of the first initial connection establishment frame, and the first extended frame includes UHR related information.

In combination with some embodiments of the second aspect, in some embodiments, the first initial connection establishment frame includes a beacon frame, and the UHR related information includes at least one of: a UHR capabilities information element, a UHR operation information element, broadcast period information of the first extended frame, service set identifier (SSID) information, timestamp information or basic service set (BSS) change sequence information.

In combination with some embodiments of the second aspect, in some embodiments, the first initial connection establishment frame includes a probe response frame, an association response frame, or a re-association response frame; and the UHR related information includes at least one of: a UHR capabilities information element, or a UHR operation information element.

In combination with some embodiments of the second aspect, in some embodiments, the first identification information is included in a supported rates and BSS membership selectors information element of the first initial connection establishment frame.

In combination with some embodiments of the second aspect, in some embodiments, the first identification information includes: a BSS membership selectors indication bit in the supported rates and BSS membership selectors information element; or an indication bit newly added in the supported rates and BSS membership selectors information element.

In combination with some embodiments of the second aspect, in some embodiments, a value of the BSS membership selectors indication bit is set to be different from a value corresponding to high throughput (HT) related information, very high throughput (VHT) related information, high efficiency (HE) related information, or extremely high throughput (EHT) related information.

In combination with some embodiments of the second aspect, in some embodiments, the method further includes: determining a second initial connection establishment frame; where the second initial connection establishment frame includes second identification information, and the second identification information indicates that: a STA supports a UHR function, and the STA subsequently sends a second extended frame of the second initial connection establishment frame, and the second extended frame includes UHR related information; and sending the second initial connection establishment frame.

In combination with some embodiments of the second aspect, in some embodiments, the second initial connection establishment frame includes a probe request frame, and the UHR related information includes at least one of: a UHR capabilities information element, or a UHR operation information element.

In combination with some embodiments of the second aspect, in some embodiments, the second initial connection establishment frame includes an association request frame or a re-association request frame; and the UHR related information includes at least one of: a UHR capabilities information element or a UHR operation information element determined according to a beacon frame.

In combination with some embodiments of the second aspect, in some embodiments, the second identification information is included in a supported rates and BSS membership selectors information element of the second initial connection establishment frame.

In combination with some embodiments of the second aspect, in some embodiments, the second identification information includes: a BSS membership selectors indication bit in the supported rates and BSS membership selectors information element; or an indication bit newly added in the supported rates and BSS membership selectors information element.

In combination with some embodiments of the second aspect, in some embodiments, a value of the BSS membership selectors indication bit is set to be different from a value corresponding to high throughput (HT) related information, very high throughput (VHT) related information, high efficiency (HE) related information, or extremely high throughput (EHT) related information.

In a third aspect, embodiments of the present invention further provide an access point device, the access point device includes at least one of a determining module or a sending module; and the access point device is configured to perform optional implementation manners of the first aspect.

In a fourth aspect, embodiments of the present invention further provide a station device, which includes a receiving module; and the station device is configured to perform the optional implementation manners of the second aspect.

In a fifth aspect, embodiments of the present invention further provide an access point device, which includes: one or more processors; and the access point device is configured to perform the optional implementation manners of the first aspect.

In a sixth aspect, embodiments of the present invention further provide a station device, which includes: one or more processors; and the station device is configured to execute the optional implementation manners of the second aspect.

In a seventh aspect, embodiments of the present invention further provide a communication system, which includes an access point device and a station device; the access point device is configured to perform the optional implementation manners according to the first aspect, and the station device is configured to perform the optional implementation manners according to the second aspect.

In an eighth aspect, embodiments of the present invention further provide a storage medium having stored therein instructions that, when run on a communication device, cause the communication device to perform the optional implementation manners of the first aspect or the second aspect.

In a ninth aspect, embodiments of the present invention provide a program product that, when executed by a communication device, causes the communication device to perform the method according to the optional implementation manners of the first aspect or the second aspect.

In a tenth aspect, embodiments of the present invention provide a computer program that, when run on a computer, causes the computer to perform the method according to the optional implementation manners of the first aspect or the second aspect.

In an eleventh aspect, embodiments of the present invention provide a chip or a chip system. The chip or chip system includes a processing circuit configured to perform the method according to the optional implementation manners of the first aspect or the second aspect.

It is understandable that the above-mentioned access point device, station device, communication system, storage medium, program product, computer program, chip or chip system each is used to execute the method proposed in embodiments of the present invention. Therefore, the beneficial effects that may be achieved thereby may refer to the beneficial effects as described in the corresponding method, which will not be repeated here.

Embodiments of the present invention provide a communication method, an access point device, a station device and a communication system. In some embodiments, terms such as communication method, signal transmission method, wireless frame transmission method, etc. may be replaced with each other, and terms such as information processing system, communication system, etc. may be replaced with each other.

Embodiments of the present invention are not exhaustive, but are only illustrative of some embodiments, and are not intended as specific limitations on the scope of protection of the present invention. In the absence of contradiction, each step in a certain embodiment may be implemented as an independent embodiment, and individual steps may be arbitrarily combined. For example, a solution obtained after removing one or more steps from a certain embodiment may also be implemented as an independent embodiment, and the order of steps in a certain embodiment may be arbitrarily interchanged. In addition, optional implementation manners in a certain embodiment may be arbitrarily combined; in addition, individual embodiments may be arbitrarily combined, for example, some or all of the steps of different embodiments may be arbitrarily combined, and a certain embodiment may be arbitrarily combined with an optional implementation manner of other embodiments.

In each embodiment of the present invention, unless otherwise specified or there is a logical conflict, terms and/or descriptions among embodiments are consistent and may be referenced to each other, and technical features in different embodiments may be combined to form new embodiments based on their internal logical relationships.

Terms used in embodiments of the present invention are for the purpose of describing specific embodiments and are not intended to limit the present invention.

In embodiments of the present invention, "a plurality of" refers to two or more.

In some embodiments, the terms "at least one", "one or more", "a plurality of", "multiple", etc., may be used interchangeably.

In some embodiments, "at least one of A or B", "A and/or B", "A in one case, B in another case", "A in response to a case, B in response to another case", etc., may include the following technical solutions depending on circumstances: in some embodiments, A (A is executed independently of B); in some embodiments, B (B is executed independently of A); in some embodiments, selection is made from A or B for execution (A or B is selectively executed); in some embodiments, A and B (both A and B are executed). The same is true when there are more branches such as A, B, C, etc.

In some embodiments, the expression of "A or B" may include the following technical solutions depending on circumstances: in some embodiments, A (A is executed independently of B); in some embodiments, B (B is executed independently of A); in some embodiments, selection is made from A or B for execution (A or B is selectively executed). The same is true when there are more branches such as A, B, C, etc.

The prefixes such as "first" and "second" in embodiments of the present invention are used to distinguish different objects described, and do not constitute restrictions on the position, order, priority, quantity or content of the objects described. For the statement of the objects described, reference may be made to the description in the context of claims or embodiments, and it should not constitute unnecessary restrictions due to the use of prefixes. For example, if the objects described are "fields", the ordinal numbers before the word "field" in "first field" and "second field" do not limit the positions or order of the "fields", and the "first" and "second" do not limit whether the "fields" they define are in the same message, nor do they limit the order of the "first field" and the "second field". For another example, if the described objects are "levels", the ordinal numbers before the word "level" in "first level" and "second level" do not limit the priority of the "levels". For another example, the number of objects described is not limited by the ordinal number, and there may exist one or more objects. Taking "first device" as an example, the number of "first devices" may be one or more. In addition, objects defined by different prefixes may be the same or different. For example, if the objects described are "devices", "first device" and "second device" may be the same device or different devices, and their types may be the same or different. For another example, if the objects described are "information", "first information" and "second information" may be the same information or different information, and their contents may be the same or different.

In some embodiments, "including A", "comprising A", "used to indicate A", and "carrying A" may be interpreted as directly including A or indirectly indicating A.

In some embodiments, terms such as "in response to ...", "in response to determining ...", "in a case where ...", "at the time of ...", "when ...", "upon ...", "if ...", etc., may be used interchangeably.

In some embodiments, terms such as "greater than", "greater than or equal to", "not less than", "more than", "more than or equal to", "not smaller than", "higher than", "higher than or equal to", "not lower than", and "above" may be replaced with each other, and terms such as "less than", "less than or equal to", "not greater than", "smaller than", "less than or equal to", "no more than", "lower than", "lower than or equal to", "not higher than", and "below" may be replaced with each other.

In some embodiments, "device" and "equipment" may be interpreted as physical or virtual, and their names are not limited to those recorded in embodiments. In some cases, they may also be understood as "equipment", "device", "circuit", "network element", "node", "function", "unit", "section", "system", "network", "chip", "chip system", "entity", "subject", etc.

In some embodiments, acquisition of data, information, etc. may comply with the laws and regulations of the country where the data is obtained.

In some embodiments, data, information, etc. may be obtained with the user's consent.

In addition, each element, each row, or each column in a table of embodiments of the present invention may be implemented as an independent embodiment, and combinations of any elements, any rows, and any columns may also be implemented as independent embodiments.

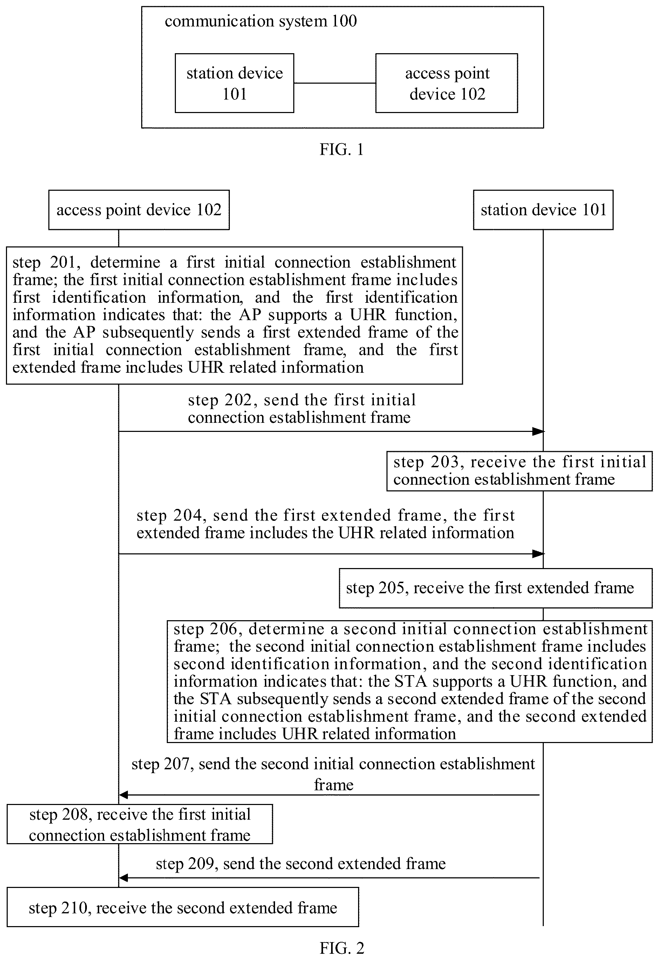

FIG. 1 is a schematic diagram of an architecture of a communication system according to embodiments of the present invention.

As shown in FIG. 1, a communication system 100 includes a station device (STA) 101 and an access point device (AP) 102.

In some embodiments, the station device 101 includes, for example, a wireless communication chip, a wireless sensor, or a wireless communication terminal that supports a WiFi communication function. Optionally, the wireless communication terminal includes at least one of, for example, a mobile phone, a wearable device, an Internet of Things device that supports a WiFi communication function, a car with a WiFi communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

Specifically, the station device 101 may be a terminal or a network device with a wireless fidelity (WiFi) chip. Optionally, the station device 101 may support multiple WLAN standards such as 802.11ax, 802.11be, 802.11ac, 802.11n, 802.11g, 802.11b and 802.11a, and support the next generation 802.11 protocol, but is not limited thereto.

In some embodiments, the access point device 102 may be an access point for a mobile terminal to access a wired network. The AP is equivalent to a bridge connecting a wired network and a wireless network, and its main function is to connect various wireless network clients together and connect the wireless network to the Ethernet. Specifically, the AP may be a terminal or a network device with a wireless fidelity chip. Optionally, the AP may support multiple WLAN standards such as 802.11ax, 802.11be, 802.11ac, 802.11n, 802.11g, 802.11b and 802.11a, as well as support the next generation 802.11 protocol, but is not limited to this.

Optionally, in embodiments of the present invention, the AP and the STA may be devices supporting multi-link, and for example, may be respectively represented as an access point multi-link device (AP MLD) and a station multi-link device (Non-Access Point Multi-Link Device, Non-AP MLD); where the AP MLD may represent an access point supporting a multi-link communication function, and the non-AP MLD may represent a station supporting a multi-link communication function.

It may be understood that the communication system described in embodiments of the present invention is for the purpose of more clearly illustrating the technical solution of embodiments of the present invention, and does not constitute a limitation on the technical solutions proposed in embodiments of the present invention. A person of ordinary skill in the art may know that with the evolution of the system architecture and the emergence of new business scenarios, the technical solutions proposed in embodiments of the present invention are also applicable to similar technical problems.

The following embodiments of the present invention may be applied to the communication system 100 or some of the subjects shown in FIG. 1, but are not limited thereto. The subjects shown in FIG. 1 are examples, and the communication system may include all or part of the subjects in FIG. 1, or may also include other subjects not shown in FIG. 1, and the number and form of the subjects are arbitrary, and the subjects may be physical or virtual, and the connection relationship between the subjects is an example, and the subjects may be connected or disconnected, and the connection may be in any manner, and may be a direct connection or an indirect connection, and may be a wired connection or a wireless connection.

The various embodiments of the present invention may be applied to a wireless local area network (WLAN), such as a local area network using the 802.11 series of protocols. In a WLAN, a basic service set (BSS) is a basic component of the WLAN. A BSS network is composed of station devices with a certain association within a specific coverage area. One case of the association is that the stations communicate directly with each other in an Ad Hoc network, which is referred to as an independent BSS (IBSS). Another more common case is that in a BSS network, there is only one central station dedicated to managing the BSS, which is referred to as an access point device, and other stations in the BSS network that are not the AP are referred to as terminals or referred to as non-AP STAs, and the AP and non-AP STAs are collectively referred to as STAs. When describing STAs, there is no need to distinguish between AP and non-AP STA. In the same BSS network, due to distance, transmission power, etc., a STA may not detect other STAs that are far away from the STA, and they are hidden nodes of each other.

FIG. 2 is a schematic interactive diagram of a communication method according to embodiments of the present invention. As shown in FIG. 2, the method includes the following steps.

**In step 201,** an access point device 102 determines a first initial connection establishment frame; the first initial connection establishment frame includes first identification information, and the first identification information indicates that: the AP (access point device 102) supports a UHR function, and the AP subsequently sends a first extended frame of the first initial connection establishment frame, and the first extended frame includes ultra high reliability (UHR) related information.

The first initial connection establishment frame is used to establish an initial connection with a station device, and the first initial connection establishment frame is, for example, a beacon frame, a probe response frame, an association response frame, or a re-association response frame. The access point device 102 introduces the first identification information in the first initial connection establishment frame, and the first identification information indicates that the access point device 102 supports the UHR function; and the first identification information also indicates that the AP subsequently sends the first extended frame of the first initial connection establishment frame, and the first extended frame includes the ultra high reliability UHR related information.

Optionally, the first initial connection establishment frame may include a capability information element and/or an operation information element of each generation of standard (each generation of 802.11 protocols); the capability information element includes at least one of a high throughput (HT) capabilities (28-octets, i.e., 28 octets) information element, a very high throughput (VHT) capabilities (14-octets) information element, a high efficiency (HE) capabilities (24-octets to 40-octets) information element, or an extremely high throughput (EHT) capabilities (greater than or equal to 19-octets) information element; and the operation information element includes at least one of a multi-link (9-octet to 13-octets) information element or an EHT operation (8-octet to 13-octets) information element, so as to ensure the forward compatibility of the access point device 102, so that the station device supporting HT, VHT, or HE may communicate with the access point device 102 and join the BSS of the access point device 102.

The access point device 102 indicates through the first identification information that the AP will subsequently send the first extended frame, and the first extended frame includes the ultra high reliability (UHR) related information, such as a UHR capabilities information element, a UHR operation information element, broadcast period information of the first extended frame, service set identifier (SSID) information, timestamp information and BSS change sequence information. By including the ultra high reliability (UHR) related information in the first extended frame to indicate related information of the UHR function supported by the access point device 102, the access point device 102 achieves backward compatibility, for example, allowing the station device supporting EHT to join the BSS of the access point device 102. By indicating the UHR function supported by the access point device 102 and including the UHR related information supported by the access point device 102 in the first extended frame, the station device 101 obtains the UHR related information supported by the access point device 102 through parsing the first extended frame, and may quickly join the BSS of the access point device 102 and perform UHR communication with the access point device 102.

For the backward compatibility, if the first identification information is sent through the first initial connection establishment frame or other initial access management frame, the frame length of the initial access management frame will inevitably become longer and longer, and it will consume more time and power for the station device to parse the initial access management frame, which is not conducive to power saving of the station device and not conducive to rapid joining of the station device to the BSS.

In some embodiments, the first initial connection establishment frame includes a beacon frame, and the UHR related information includes at least one of: a UHR capabilities information element, a UHR operation information element, broadcast period information of the first extended frame, SSID information, timestamp information or BSS change sequence information.

The access point device 102 periodically sends the beacon frame at a certain time interval, and the beacon frame includes the UHR related information, thereby realizing synchronous operation and sleep of devices in the network. For example, after receiving the beacon frame, the station device 101 joins the network, and determines, according to the UHR capabilities information element and/or the UHR operation information element, a UHR capabilities information element that is consistent with the UHR capabilities information element in the beacon frame, and/or a UHR operation information element that is consistent with the UHR operation information element in the beacon frame, so as to determine UHR related capability information of the station device 101.

The broadcast period information of the first extended frame is used by the station device 101 to receive the first extended frame according to the broadcast period information.

Optionally, the UHR related information further includes at least one of: SSID information, timestamp information or BSS change sequence information; the SSID information or the timestamp information is used by the station device 101 to determine information for joining the BSS of the access point device 102 and to join the BSS of the access point device 102; and the BSS change sequence information is used to indicate a BSS parameter change of the access point device 102.

In some embodiments, the first initial connection establishment frame includes a probe response frame, an association response frame, or a re-association response frame; and the UHR related information includes at least one of: a UHR capabilities information element, or a UHR operation information element.

When the station device 101 scans for 802.11 networks currently available in an area where it is located, it sends a probe request frame to the access point device 102, and the access point device 102 replies with a probe response frame; when the station device 101 is authenticated and attempts to join the network, it sends an association request frame (or a re-association request frame) to the access point device 102, and the access point device 102 replies with an association response frame (or a re-association response frame).

The access point device 102 introduces the UHR capabilities information element and/or the UHR operation information element in the probe response frame, the association response frame, and/or the re-association response frame, to indicate the UHR capability information supported by the access point device 102.

In some embodiments, the first identification information is included in a supported rates and BSS membership selectors information element of the first initial connection establishment frame, and the supported rates and BSS membership selectors information element indicates that the access point device 102 supports the UHR function and the UHR related information is included in the subsequent first extended frame.

In some embodiments, the first identification information includes: a BSS membership selectors indication bit in the supported rates and BSS membership selectors information element; or an indication bit newly added in the supported rates and BSS membership selectors information element.

The BSS membership selectors indication bit may be used by the first identification information, for example, the BSS membership selectors indication bit may be assigned with a value, to indicate that the access point device 102 supports the UHR function and the UHR related information is included in the subsequent first extended frame; or a new indication bit is added in the supported rates and BSS membership selectors information element to indicate that the access point device 102 supports the UHR function and the UHR related information is included in the subsequent first extended frame.

In some embodiments, a value of the BSS membership selectors indication bit is set to be different from a value corresponding to high throughput (HT) related information, very high throughput (VHT) related information, high efficiency (HE) related information, or extremely high throughput (EHT) related information. For a case where the BSS membership selectors indication bit is used to indicate that the access point device 102 supports the UHR function and the UHR related information is included in the subsequent first extended frame, the value of the BSS membership selectors indication bit is set to be different from the value corresponding to the HT related information, the VHT related information, the HE related information or the EHT related information to distinguish the UHR related information from the HT related information, the VHT related information, the HE related information or the EHT related information.

**In step 202,** the access point device 102 sends the first initial connection establishment frame.

The access point device 102 introduces the first identification information in the first initial connection establishment frame to indicate that the access point device 102 supports the UHR function; and the first identification information also indicates that the AP subsequently sends the first extended frame of the first initial connection establishment frame, and the first extended frame includes the ultra high reliability (UHR) related information.

**In step 203,** the station device 101 receives the first initial connection establishment frame.

The station device 101 receives the first initial connection establishment frame, and determines according to the first identification information that: the access point device 102 supports the UHR function, and subsequently sends the first extended frame including the UHR related information.

**In step 204,** the access point device 102 sends the first extended frame, and the first extended frame includes the ultra high reliability (UHR) related information.

The access point device 102 introduces the ultra high reliability (UHR) related information in the first extended frame to indicate related information of the UHR function supported by the access point device 102, so that the access point device 102 achieves backward compatibility.

**In step 205,** the station device 101 receives the first extended frame.

The first extended frame includes the information that the access point device 102 supports the UHR function and the UHR related information supported by the access point device 102, so that the station device 101 obtains the aforementioned information through parsing the first extended frame, and may quickly join the BSS of the access point device 102 and perform UHR communication with the access point device 102.

**In step 206,** the station device 101 determines a second initial connection establishment frame; the second initial connection establishment frame includes second identification information, and the second identification information indicates that: the STA supports a UHR function, and the STA subsequently sends a second extended frame of the second initial connection establishment frame, and the second extended frame includes UHR related information.

The station device 101 indicates in the second identification information that the station device 101 supports the UHR function, and subsequently sends the second extended frame; the second extended frame includes the UHR related information, such as a UHR capabilities information element or a UHR operation information element. By including the UHR related information in the second extended frame to indicate related information of the UHR function supported by the station device 101, the access point device 102 may obtain the aforementioned information through parsing the second extended frame. If the UHR related information of the station device 101 is consistent with the UHR related information of the access point device 102, the station device 101 may join the BSS of the access point device 102 and perform UHR communication with the access point device 102.

For the backward compatibility, if the second identification information is sent through the second initial connection establishment frame or other initial access management frame, the frame length of the initial access management frame will inevitably become longer and longer, and it will consume more time and power for the access point device 102 to parse the initial access management frame, which is not conducive to power saving of the access point device 102 and not conducive to rapid joining of the station device 101 to the BSS.

In some embodiments, the second initial connection establishment frame includes a probe request frame, and the UHR related information includes at least one of: a UHR capabilities information element, or a UHR operation information element.

When the station device 101 scans for 802.11 networks currently available in an area where it is located, it sends a probe response frame including the UHR capabilities information element and/or the UHR operation information element to the access point device 102 to indicate UHR capability information supported by the station device 101.

In some embodiments, the second initial connection establishment frame includes an association request frame or a re-association request frame; and the UHR related information includes at least one of: a UHR capabilities information element or a UHR operation information element determined according to a beacon frame.

The access point device 102 periodically sends the beacon frame at a certain time interval, and the beacon frame includes the UHR related information, thereby realizing synchronous operation and sleep of devices in the network.

After receiving the beacon frame, the station device 101 joins the network, and based on the UHR capabilities information element and/or the UHR operation information element, the station device 101 determines a UHR capabilities information element that is consistent with the UHR capabilities information element in the beacon frame, and/or determines a UHR operation information element that is consistent with the UHR operation information element in the beacon frame, so as to determine the UHR related capability information of the station device 101.

When the station device 101 is authenticated and attempts to join the network, it sends an association request frame (or a re-association request frame) to the access point device 102, and the association response frame and/or the re-association response frame include the UHR capabilities information element and/or the UHR operation information element to indicate the UHR capability information supported by the access point device 102.

In some embodiments, the second identification information is included in a supported rates and BSS membership selectors information element of the second initial connection establishment frame, and the supported rates and BSS membership selectors information element indicates that the station device 101 supports the UHR function and the UHR related information is included in the subsequent second extended frame.

In some embodiments, the second identification information includes: a BSS membership selectors indication bit in the supported rates and BSS membership selectors information element; or an indication bit newly added in the supported rates and BSS membership selectors information element.

The BSS membership selectors indication bit may be used by the second identification information, for example, the BSS membership selectors indication bit may be assigned with a value, to indicate that the station device 101 supports the UHR function and the UHR related information is included in the subsequent second extended frame; or a new indication bit is added in the supported rates and BSS membership selectors information element to indicate that the station device 101 supports the UHR function and the UHR related information is included in the subsequent second extended frame.

In some embodiments, a value of the BSS membership selectors indication bit is set to be different from a value corresponding to high throughput (HT) related information, very high throughput (VHT) related information, high efficiency (HE) related information, or extremely high throughput (EHT) related information. For a case where the BSS membership selectors indication bit is used to indicate that the station device 101 supports the UHR function and the UHR related information is included in the subsequent first extended frame, the value of the BSS membership selectors indication bit is set to be different from the value corresponding to the HT related information, the VHT related information, the HE related information or the EHT related information to distinguish the UHR related information from the HT related information, the VHT related information, the HE related information or the EHT related information.

**In step 207,** the station device 101 sends the second initial connection establishment frame.

The station device 101 introduces the second identification information in the second initial connection establishment frame, and the second identification information indicates that the station device 101 supports the UHR function; and the second identification information also indicates that the station device 101 subsequently sends the second extended frame of the second initial connection establishment frame, and the second extended frame includes the UHR related information.

**In step 208,** the access point device 102 receives the second initial connection establishment frame.

The access point device 102 receives the second initial connection establishment frame, and determines according to the second identification information that: the station device 101 supports the UHR function, and will subsequently send the second extended frame including the UHR related information.

**In step 209,** the station device 101 sends the second extended frame.

The station device 101 introduces the UHR related information in the second extended frame to indicate related information of the UHR function supported by the station device 101, to allow the access point device 102 to achieve backward compatibility.

**In step 210,** the access point device 102 receives the second extended frame.

The second extended frame includes the UHR function supported by the station device 101 and the UHR related information supported by the station device 101, so that the access point device 102 may obtain the aforementioned information through parsing the second extended frame, so that the station device 101 may quickly join the BSS of the access point device 102 and perform UHR communication with the access point device 102.

In embodiments of the present invention, by including the UHR related information in the extended frame, backward compatibility of the access point device is achieved; and the device obtains the UHR related information through parsing the extended frame, so that the station device 101 may quickly join the BSS of the access point device 102 and perform UHR communication with the access point device 102. Embodiments of the present invention improve the format of the initial access frame, and make it applicable to UHR requirements.

In some embodiments, the names of various information, etc., are not limited to those recorded in embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" may be used interchangeably.

In some embodiments, terms such as "moment", "time point", "time", and "time position" may be interchangeable, and terms such as "duration", "time period", "time window", "window", and "time" may be interchangeable.

In some embodiments, terms such as "resource block (RB)", "physical resource block (PRB)", "sub-carrier group (SCG)", "resource element group (REG)", "PRB pair", "RB pair", "resource element (RE)", and "sub-carrier" may be used interchangeably.

In some embodiments, terms such as wireless access scheme, waveform, etc., may be used interchangeably.

In some embodiments, terms such as "certain", "preset", "predetermined", "set", "indicated", "specific", "any", and "first" may be interchangeable, and "certain A", "preset A", "predetermined A", "set A", "indicated A", "specific A", "any A", and "first A" may be interpreted as A pre-defined in a protocol, etc., or may be interpreted as A obtained through setting, configuration, or indication, etc., and may also be interpreted as certain A, specific A, any A, or first A, etc., but are not limited thereto.

In some embodiments, determination or judgment may be made by a value (0 or 1) of 1 bit, by a boolean value represented by true or false, or by comparison of numerical values (for example, comparison with a predetermined value), but is not limited thereto.

In some embodiments, "not expecting to receive" may be interpreted as not receiving on a time domain resource and/or a frequency domain resource, or may be interpreted as not performing subsequent processing on data after receiving the data; "not expecting to send" may be interpreted as not sending, or may be interpreted as sending but not expecting the recipient to respond to the sent content.

The communication method involved in embodiments of the present invention may include at least one of the aforementioned steps and embodiments. For example, for steps 201 to 210, each step may be implemented as an independent embodiment; the combination of step 201 and step 202 may be implemented as an independent embodiment, the combination of step 202 and step 203 may be implemented as an independent embodiment, the combination of step 204 and step 205 may be implemented as an independent embodiment, the combination of step 206 and step 207 may be implemented as an independent embodiment, the combination of step 207 and step 208 may be implemented as an independent embodiment, and the combination of step 209 and step 210 may be implemented as an independent embodiment, but the present invention is not limited thereto.

In some embodiments, reference may be made to other optional implementation manners recorded before or after the description corresponding to FIG. 2.

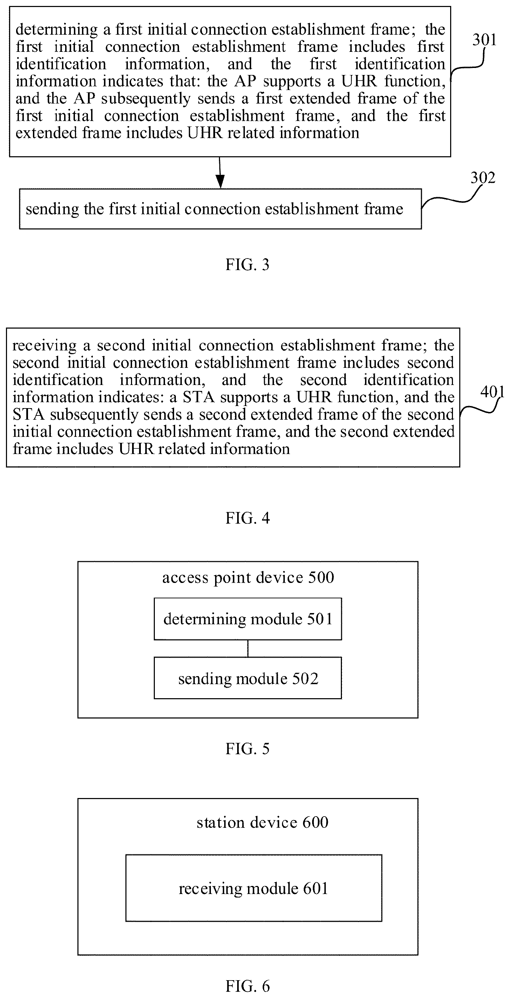

FIG. 3 is a schematic flowchart of a communication method according to embodiments of the present invention.

As shown in FIG. 3, the above method may be applied to an access point device 102, and the above method includes the following steps.

In step 301, the access point device (AP) determines a first initial connection establishment frame; the first initial connection establishment frame includes first identification information, and the first identification information indicates that: the AP supports a UHR function, and the AP subsequently sends a first extended frame of the first initial connection establishment frame, and the first extended frame includes ultra high reliability (UHR) related information.

In step 302, the first initial connection establishment frame is sent.

In the above embodiments, by including the UHR related information in the first extended frame, backward compatibility of the access point device is achieved; and the station device obtains the UHR related information through parsing the first extended frame, so that the station device may quickly join the BSS of the access point device and perform UHR communication with the access point device.

Optionally, in embodiments of the present invention, the first initial connection establishment frame includes a beacon frame, and the ultra high reliability (UHR) related information includes at least one of: a UHR capabilities information element, a UHR operation information element, broadcast period information of the first extended frame, SSID information, timestamp information or BSS change sequence information.

Optionally, in embodiments of the present invention, the first initial connection establishment frame includes a probe response frame, an association response frame, or a re-association response frame; and the UHR related information includes at least one of: a UHR capabilities information element, or a UHR operation information element.

Optionally, in embodiments of the present invention, the first identification information is included in a supported rates and BSS membership selectors information element of the first initial connection establishment frame.

Optionally, in embodiments of the present invention, the first identification information includes: a BSS membership selectors indication bit in the supported rates and BSS membership selectors information element; or an indication bit newly added in the supported rates and BSS membership selectors information element.

Optionally, in embodiments of the present invention, a value of the BSS membership selectors identification bit is set to be different from a value corresponding to high throughput (HT) related information, very high throughput (VHT) related information, high efficiency (HE) related information, or extremely high throughput (EHT) related information.

Optionally, in embodiments of the present invention, the method further includes: step 303.

In step 303, a second initial connection establishment frame is received; the second initial connection establishment frame includes second identification information, and the second identification information indicates that: a station device (STA) supports a UHR function, and the STA subsequently sends a second extended frame of the second initial connection establishment frame, and the second extended frame includes UHR related information.

Optionally, in embodiments of the present invention, the second initial connection establishment frame includes a probe request frame, and the UHR related information includes at least one of: a UHR capabilities information element, or a UHR operation information element.

Optionally, in embodiments of the present invention, the second initial connection establishment frame includes an association request frame or a re-association request frame; and the UHR related information includes at least one of: a UHR capabilities information element or a UHR operation information element determined according to a beacon frame.

Optionally, in embodiments of the present invention, the second identification information is included in a supported rates and BSS membership selectors information element of the second initial connection establishment frame.

Optionally, in embodiments of the present invention, the second identification information includes: a BSS membership selectors indication bit in the supported rates and BSS membership selectors information element; or an indication bit newly added in the supported rates and BSS membership selectors information element.

Optionally, in embodiments of the present invention, a value of the BSS membership selectors identification bit is set to be different from a value corresponding to high throughput (HT) related information, very high throughput (VHT) related information, high efficiency (HE) related information, or extremely high throughput (EHT) related information.

The communication method involved in embodiments of the present invention may include at least one of the aforementioned steps and embodiments. For example, step 301 may be implemented as an independent embodiment, step 302 may be implemented as an independent embodiment, step 303 may be implemented as an independent embodiment; and the combination of step 301 and step 302 may be implemented as an independent embodiment, but the present invention is not limited thereto.

In some embodiments, reference may be made to other optional implementation manners recorded before or after the description corresponding to FIG. 3.

FIG. 4 is another schematic flowchart of a communication method according to embodiments of the present invention.

As shown in FIG. 4, the method is applied to a station device (STA), and includes a following step.

In step 401, a first initial connection establishment frame is received; the first initial connection establishment frame includes first identification information, and the first identification information indicates that: an access point device (AP) supports a UHR function, and the AP subsequently sends a first extended frame of the first initial connection establishment frame, and the first extended frame includes ultra high reliability (UHR) related information.

Optionally, in embodiments of the present invention, the first initial connection establishment frame includes a beacon frame, and the UHR related information includes at least one of: a UHR capabilities information element, a UHR operation information element, broadcast period information of the first extended frame, SSID information, timestamp information or BSS change sequence information.

Optionally, in embodiments of the present invention, the first initial connection establishment frame includes a probe response frame, an association response frame or a re-association response frame; and the UHR related information includes at least one of: a UHR capabilities information element, or a UHR operation information element.

Optionally, in embodiments of the present invention, the first identification information is included in a supported rates and BSS membership selectors information element of the first initial connection establishment frame.

Optionally, in embodiments of the present invention, the first identification information includes: a BSS membership selectors indication bit in the supported rates and BSS membership selectors information element; or an indication bit newly added in the supported rates and BSS membership selectors information element.

Optionally, in embodiments of the present invention, a value of the BSS membership selectors indication bit is set to be different from a value corresponding to high throughput (HT) related information, very high throughput (VHT) related information, high efficiency (HE) related information, or extremely high throughput (EHT) related information.

Optionally, in embodiments of the present invention, the method further includes the following steps.

In step 402, a second initial connection establishment frame is determined; the second initial connection establishment frame includes second identification information, and the second identification information indicates that: the STA supports a UHR function, and the STA subsequently sends a second extended frame of the second initial connection establishment frame, and the second extended frame includes UHR related information.

In step 403: the second initial connection establishment frame is sent.

Optionally, in embodiments of the present invention, the second initial connection establishment frame includes a probe request frame, and the UHR related information includes at least one of: a UHR capabilities information element, or a UHR operation information element.

Optionally, in embodiments of the present invention, the second initial connection establishment frame includes an association request frame or a re-association request frame; and the UHR related information includes at least one of: a UHR capabilities information element or a UHR operation information element determined according to a beacon frame.

Optionally, in embodiments of the present invention, the second identification information is included in a supported rates and BSS membership selectors information element of the second initial connection establishment frame.

Optionally, in embodiments of the present invention, the second identification information includes: a BSS membership selectors indication bit in the supported rates and BSS membership selectors information element; or an indication bit newly added in the supported rates and BSS membership selectors information element.

Optionally, in embodiments of the present invention, a value of the BSS membership selectors indication bit is set to be different from a value corresponding to high throughput (HT) related information, very high throughput (VHT) related information, high efficiency (HE) related information, or extremely high throughput (EHT) related information.

The communication method involved in embodiments of the present invention may include at least one of the aforementioned steps and embodiments. For example, step 401 may be implemented as an independent embodiment, step 402 may be implemented as an independent embodiment, step 403 may be implemented as an independent embodiment; and the combination of step 402 and step 403 may be implemented as an independent embodiment, but the present invention is not limited thereto.

In some embodiments, reference may be made to other optional implementation manners recorded before or after the description corresponding to FIG. 4.

Embodiments of the present invention also provide a device for implementing any of the above methods. For example, a device is provided, and the device includes a unit or a module for implementing each step performed by a terminal in any of the above methods. For another example, another device is also provided, and the device includes a unit or a module for implementing each step performed by a network device (for example, an access network device, a core network function node, a core network device, etc.) in any of the above methods.

It should be understood that units or modules in the above device are divided according to logical functions, and in actual implementation, they may be fully or partially integrated into one physical entity, or they may be physically separated. In addition, the units or modules in the device may be implemented in the form of a processor calling software. For example, the device includes a processor, the processor is connected to a memory, and instructions are stored in the memory. The processor calls the instructions stored in the memory to implement any of the above methods or implement the functions of the units or modules of the above device. The processor is, for example, a general-purpose processor, for example, a central processing unit (CPU) or a microprocessor, and the memory is a memory inside the device or a memory outside the device. Alternatively, the units or modules in the device may be implemented in the form of a hardware circuit, and the functions of some or all of the units or modules may be realized by designing the hardware circuit. The above hardware circuit may be understood as one or more processors. For example, in an implementation, the above hardware circuit is an application-specific integrated circuit (ASIC), and the functions of some or all of the above units or modules are realized by designing logical relationship of components in the circuit. For example, in another implementation, the above hardware circuit may be realized by a programmable logic device (PLD). Taking a field programmable gate array (FPGA) as an example, the FPGA may include a large number of logic gate circuits, and the connection relationship between the logic gate circuits is configured by a configuration document, thereby realizing the functions of some or all of the above units or modules. The units or modules of the above device may be realized all in the form of a processor calling software, or may be realized all in the form of a hardware circuit, or a part thereof is realized in the form of a processor calling software, and the rest is realized in the form of a hardware circuit.

In embodiments of the present invention, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP), etc.; in another implementation, the processor may implement a certain function through a logical relationship of the hardware circuit, and the logical relationship of the above hardware circuit may be fixed or reconfigurable. For example, the processor is a hardware circuit implemented by an application-specific integrated circuit (ASIC) or a programmable logic device (PLD), such as an FPGA. In a reconfigurable hardware circuit, the processor loads a configuration document to implement a process of hardware circuit configuration, which may be understood as a process where the processor loads instructions to implement the functions of part or all of the above units or modules. In addition, the processor may also be a hardware circuit designed for artificial intelligence, which may be understood as an ASIC, such as a neural network processing unit (NPU), a tensor processing unit (TPU), a deep learning processing unit (DPU), etc.

FIG. 5 is a schematic block diagram of an access point device according to embodiments of the present invention. As shown in FIG. 5, the access point device 500 may include: at least one of a determining module 501 or a sending module 502.

In some embodiments, the determining module 501 is configured to determine a first initial connection establishment frame, the first initial connection establishment frame includes first identification information, and the first identification information indicates that: the AP supports a UHR function, and the AP subsequently sends a first extended frame of the first initial connection establishment frame, and the first extended frame includes ultra high reliability (UHR) related information. The sending module 502 is configured to send the first initial connection establishment frame.

Optionally, the determining module 601 is configured to execute at least one of the communication steps (for example, step 201, step 204, step 208, step 210, step 301, step 302, or step 303, but not limited thereto) performed by the access point device 102 as described in any of the above methods, which will not be repeated here. The sending module 602 is configured to execute step 202 or step 302.

FIG. 6 is a schematic block diagram of a station device according to embodiments of the present invention. As shown in FIG. 6, the station device is a station device, and the station device 600 may include: a receiving module 601.

In some embodiments, the receiving module 601 is configured to receive a first initial connection establishment frame; the first initial connection establishment frame includes first identification information, and the first identification information indicates that: an access point device (AP) supports a UHR function, and the AP subsequently sends a first extended frame of the first initial connection establishment frame, and the first extended frame includes ultra high reliability (UHR) related information.

Optionally, the receiving module 601 is configured to execute at least one of the communication steps (for example, step 202, step 203, or step 205, but not limited thereto) performed by the station device 101 as described in any of the above methods, which will not be repeated here.

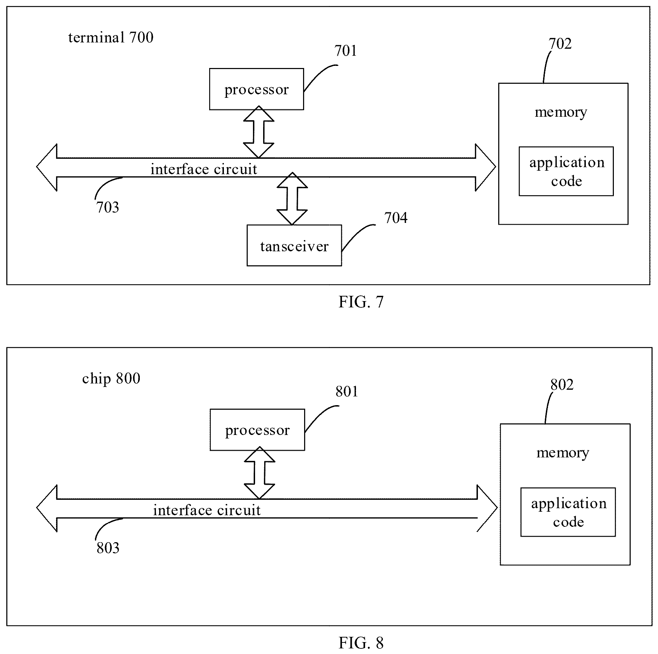

FIG. 7 is a schematic block diagram of a terminal 700 (for example, a user equipment) according to embodiments of the present invention. The terminal 700 may be a chip, a chip system, a processor or the like that supports a network device to implement any of the above methods, or may be a chip, a chip system, a processor or the like that supports a terminal to implement any of the above methods. The terminal 700 may be configured to implement the method described in the above method embodiments, and for details, reference may be made to the description in the above method embodiments.

As shown in FIG. 7, the terminal 700 includes one or more processors 701. The processor 701 may be a general purpose processor or a dedicated processor, for example, a baseband processor or a central processing unit. The baseband processor may be configured to process a communication protocol or communication data, and the central processing unit may be configured to control a communication device (such as a base station, a baseband chip, a terminal, a terminal chip, a DU or a CU, etc.), execute a program, or process the data of the program. The terminal 700 is configured to perform any of the above methods.

In some embodiments, the terminal 700 further includes one or more memories 702 for storing instructions. Optionally, all or part of the memories 702 may also be located outside the terminal 700.

In some embodiments, the terminal 700 further includes one or more transceivers 704. When the terminal 700 includes one or more transceivers 704, the one or more transceivers 704 perform at least one of the communication steps, for example, sending and/or receiving steps in the above method (for example, step 202, step 203, step 204, step 205, step 207, step 208, step 209, step 210, step 302, step 303, step 401, step 403, or step 501, but not limited thereto), and the processor 701 performs at least one of the other steps (for example, step 201, step 206, step 301, or step 402, but not limited thereto).

In some embodiments, the transceiver may include a receiver and/or a transmitter, and the receiver and the transmitter may be separate or integrated. Optionally, the terms such as "transceiver", "transceiver unit", "transceiver device", "transceiver circuit", etc. may be replaced with each other, the terms such as "transmitter", "transmitting unit", "sender", "transmitting circuit", etc. may be replaced with each other, and the terms such as "receiver", "receiving unit", "recipient", "receiving circuit", etc. may be replaced with each other.

In some embodiments, the terminal 700 may include one or more interface circuits 703. Optionally, the interface circuit 703 is connected to the memory 702, and the interface circuit 703 may be used to receive signals from the memory 702 or other devices, and may be used to send signals to the memory 702 or other devices. For example, the interface circuit 703 may read instructions stored in the memory 702 and send the instructions to the processor 701.

The terminal 700 described in the above embodiments may be a communication device such as a user equipment, but the scope of the terminal 700 described in the present invention is not limited thereto, and the structure of the terminal 700 may not be limited by FIG. 13A. The communication device may be an independent device or may be part of a larger device. For example, the communication device may be: (1) an independent integrated circuit (IC), a chip, or a chip system or subsystem; (2) a set of one or more ICs, optionally, the IC set may also include a storage component for storing data and programs; (3) an ASIC, for example, a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others.

FIG. 8 is a schematic block diagram of a chip 800 according to embodiments of the present invention. For a case where the terminal 1300 may be a chip or a chip system, reference may be made to the schematic block diagram of the chip 800 shown in FIG. 8, but the present invention is not limited thereto.

The chip 800 includes one or more processors 801, and the chip 800 is configured to perform any of the above methods.

In some embodiments, the chip 800 further includes one or more interface circuits 803. Optionally, the interface circuit 803 is connected to a memory 802, and the interface circuit 803 may be configured to receive signals from the memory 802 or other devices, and the interface circuit 803 may be configured to send signals to the memory 802 or other devices. For example, the interface circuit 803 may read the instructions stored in the memory 802 and send the instructions to the processor 801.

In some embodiments, the interface circuit 803 executes at least one of the communication steps, for example, sending and/or receiving steps in the above method (for example, step 202, step 203, step 204, step 205, step 207, step 208, step 209, step 210, step 302, step 303, step 401, step 403, or step 501, but not limited thereto), and the processor 801 executes at least one of the other steps (for example, step 201, step 206, step 301, or step 402, but not limited thereto).

In some embodiments, terms such as "interface circuit", "interface", "transceiver pin", and "transceiver" may be used interchangeably.

In some embodiments, the chip 800 also includes one or more memories 802 for storing instructions. Alternatively, all or part of the memories 802 may be located outside the chip 800.

The present invention also provides a storage medium having stored thereon instructions that, when run on the terminal 700, cause the terminal 700 to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a temporary storage medium.

The present invention also provides a program product that, when executed by the terminal 700, causes the terminal 700 to perform any of the above methods. Optionally, the program product is a computer program product.

The present invention also provides a computer program that, when run on a computer, causes the computer to execute any one of the above methods.

## Claims

1. A communication method, comprising:
determining, by an access point device (AP), a first initial connection establishment frame; wherein the first initial connection establishment frame comprises first identification information, and the first identification information indicates that: the AP supports an ultra high reliability (UHR) function, and the AP subsequently sends a first extended frame of the first initial connection establishment frame, and the first extended frame comprises UHR related information; and
sending the first initial connection establishment frame.

2. The communication method according to claim 1, wherein the first initial connection establishment frame comprises a beacon frame, and the UHR related information comprises at least one of:
a UHR capabilities information element, a UHR operation information element, broadcast period information of the first extended frame, service set identifier (SSID) information, timestamp information or basic service set (BSS) change sequence information.

3. The communication method according to claim 1, wherein the first initial connection establishment frame comprises a probe response frame, an association response frame or a re-association response frame; and
the UHR related information comprises at least one of:
a UHR capabilities information element, or a UHR operation information element.

4. The communication method according to any one of claims 1 to 3, wherein the first identification information is comprised in a supported rates and BSS membership selectors information element of the first initial connection establishment frame.

5. The communication method according to claim 4, wherein the first identification information comprises:
a BSS membership selectors indication bit in the supported rates and BSS membership selectors information element; or
an indication bit newly added in the supported rates and BSS membership selectors information element.

6. The communication method according to claim 5, wherein a value of the BSS membership selectors indication bit is set to be different from a value corresponding to high throughput (HT) related information, very high throughput (VHT) related information, high efficiency (HE) related information or extremely high throughput (EHT) related information.

7. The communication method according to claim 1, further comprising:
receiving a second initial connection establishment frame; wherein the second initial connection establishment frame comprises second identification information, and the second identification information indicates: a station device (STA) supports a UHR function, and the STA subsequently sends a second extended frame of the second initial connection establishment frame, and the second extended frame comprises UHR related information.

8. The communication method according to claim 7, wherein the second initial connection establishment frame comprises a probe request frame, and
the UHR related information comprises at least one of:
a UHR capabilities information element, or a UHR operation information element.

9. The communication method according to claim 7, wherein the second initial connection establishment frame comprises an association request frame or a re-association request frame, and
the UHR related information comprises at least one of:
a UHR capabilities information element or a UHR operation information element, determined according to a beacon frame.

10. The communication method according to any one of claims 7 to 9, wherein the second identification information is comprised in a supported rates and BSS membership selectors information element of the second initial connection establishment frame.

11. The communication method according to claim 10, wherein the second identification information comprises:
a BSS membership selectors indication bit in the supported rates and BSS membership selectors information element; or
an indication bit newly added in the supported rates and BSS membership selectors information element.

12. The communication method according to claim 11, wherein a value of the BSS membership selectors indication bit is set to be different from a value corresponding to high throughput (HT) related information, very high throughput (VHT) related information, high efficiency (HE) related information or extremely high throughput (EHT) related information.

13. A communication method, comprising:
receiving, by a station device (STA), a first initial connection establishment frame; wherein the first initial connection establishment frame comprises first identification information, and the first identification information indicates: an access point device (AP) supports an ultra-high reliability (UHR) function, and the AP subsequently sends a first extended frame of the first initial connection establishment frame, and the first extended frame comprises UHR related information.

14. The communication method according to claim 13, wherein the first initial connection establishment frame comprises a beacon frame, and the UHR related information comprises at least one of:
a UHR capabilities information element, a UHR operation information element, broadcast period information of the first extended frame, service set identifier (SSID) information, timestamp information or basic service set (BSS) change sequence information.

15. The communication method according to claim 14, wherein the first initial connection establishment frame comprises a probe response frame, an association response frame or a re-association response frame; and
the UHR related information comprises at least one of:
a UHR capabilities information element, or a UHR operation information element.

16. The communication method according to any one of claims 13 to 15, wherein the first identification information is comprised in a supported rates and BSS membership selectors information element of the first initial connection establishment frame.

17. The communication method according to claim 16, wherein the first identification information comprises:
a BSS membership selectors indication bit in the supported rates and BSS membership selectors information element; or
an indication bit newly added in the supported rates and BSS membership selectors information element.

18. The communication method according to claim 16, wherein a value of the BSS membership selectors indication bit is set to be different from a value corresponding to high throughput (HT) related information, very high throughput (VHT) related information, high efficiency (HE) related information or extremely high throughput (EHT) related information.

19. The communication method according to claim 17, further comprising:
determining a second initial connection establishment frame; wherein the second initial connection establishment frame comprises second identification information, and the second identification information indicates that: the STA supports a UHR function, and the STA subsequently sends a second extended frame of the second initial connection establishment frame, and the second extended frame comprises UHR related information; and
sending the second initial connection establishment frame.

20. The communication method according to claim 19, wherein the second initial connection establishment frame comprises a probe request frame, and the UHR related information comprises at least one of:
a UHR capabilities information element, or a UHR operation information element.

21. The communication method according to claim 20, wherein the second initial connection establishment frame comprises an association request frame or a re-association request frame; and
the UHR related information comprises at least one of:
a UHR capabilities information element or a UHR operation information element, determined according to a beacon frame.

22. The communication method according to any one of claims 19 to 21, wherein the second identification information is comprised in a supported rates and BSS membership selectors information element of the second initial connection establishment frame.

23. The communication method according to claim 22, wherein the second identification information comprises:
a BSS membership selectors indication bit in the supported rates and BSS membership selectors information element; or
an indication bit newly added in the supported rates and BSS membership selectors information element.

24. The communication method according to claim 23, wherein a value of the BSS membership selectors indication bit is set to be different from a value corresponding to high throughput (HT) related information, very high throughput (VHT) related information, high efficiency (HE) related information or extremely high throughput (EHT) related information.

25. An access point device (AP), comprising:
a determining module, configured to determine a first initial connection establishment frame; wherein the first initial connection establishment frame comprises first identification information, and the first identification information indicates that: the AP supports an ultra-high reliability (UHR) function, and the AP subsequently sends a first extended frame of the first initial connection establishment frame, and the first extended frame comprises UHR related information; and
a sending module, configured to send the first initial connection establishment frame.

26. A station device (STA), comprising:
a receiving module, configured to receive a first initial connection establishment frame; wherein the first initial connection establishment frame comprises first identification information, and the first identification information indicates that: an access point device (AP) supports an ultra-high reliability (UHR) function, and the AP subsequently sends a first extended frame of the first initial connection establishment frame, and the first extended frame comprises UHR related information.

27. An access point device, comprising:
one or more processors;
wherein the access point device is configured to perform the communication method according to any one of claims 1 to 12.

28. A station device, comprising:
one or more processors;
wherein the station device is configured to perform the communication method according to any one of claims 13 to 24.

29. A communication system, comprising an access point device and a station device (STA); wherein the access point device is configured to implement the communication method according to any one of claims 1 to 12, and the STA is configured to implement the communication method according to any one of claims 13 to 24.

30. A storage medium, having stored therein instructions that when run on a communication device, cause the communication device to perform the communication method according to any one of claims 1 to 12, or the communication method according to any one of claims 13 to 24.
